# EUROPEAN PATENT APPLICATION

(11) **EP 4 819 471 A1**
(43) Date of publication of application: **07.10.2026**
(21) Application number: 26168649.7
(22) Date of filing: 27.03.2026
(51) Int. Cl.: H02M 3/158, H02M 1/00, H05B 45/375

(54) **BUCK CURRENT REGULATOR**

(30) Priority: 31.03.2025 FR 2503348
(71) Applicant: STMicroelectronics International N.V., 1228 Plan-les-Ouates, Geneva (CH)
(72) Inventor: BERAN, Ludek, 25163 STRANCICE (CZ); FURIO, Alfonso, 80992 MUNCHEN (DE); POLETTO, Vanni, 20151 MILANO (IT)
(74) Representative: Cabinet Beaumont

(57) **Abstract**

The present disclosure relates to a step-down converter operating at a constant switching period (Tsw). The high side and low side switches of the converter are controlled by comparing a current (IL) flowing across an inductor connected to the converter with a first threshold (ThH) equal to ILtarget + ILband/2 and a second threshold (ThL) equal to ILtarget - Ilband/2. ILtarget is determined by a constant target average value (Icst) of the current (IL). ILband is determined based on one of the following equations:$ILband = \left(Vld/Lv\right) * Toff ,$ with Toff a value of an ON-time duration of the low side switch, Lv an inductance value of the inductor (L), and Vld a voltage across a load connected to the inductor, and$ILband = Tsw * \left(Vld/Lv\right) * \left(1-\left(Vld/Vsup\right)\right) ,$ with Tsw the constant switching period, and Vsup a supply voltage.

## Description

### Technical field

The present disclosure relates generally to electronic circuits, for example integrated electronic circuits, and, more particularly to buck, or step-down, current regulators.

### Background art

A buck current regulator, for example of the switched mode power supply type, is configured to provide a regulated average current to a load, the voltage across the load being lower than a supply voltage of the current regulator.

However, when the value of the load varies, the voltage across the load varies in consequence and it becomes difficult for the known current regulators to maintain the regulated average current equal to a target value.

This is for example the case when the load is a string of components, for example a string of light emitting diodes (LED), that can be each bypassed independently of the other components of the string. For example, for a string of 12 to 16 LEDs, the voltage at the output of the regulator may vary from 3 V to 60 V.

### Summary of Invention

There is a need for a buck current regulator of the switched mode power supply type that addresses all or some of the drawbacks of known buck current regulators.

One embodiment addresses all or some of the drawbacks of known buck current regulators.

One embodiment provides a step-down switched mode power supply configured to operate at a constant switching period and comprising:
a high side switch connected between a first node configured to receive a power supply potential, and an intermediate node configured to be coupled to a first terminal of an inductor;
a low side switch connected between the intermediate node and a second node configured to receive a reference potential;
   and
a first circuit configured to implement, at each switching period, the following operations:
   - switching ON the high side switch at the beginning of the switching period, keeping the high side switch ON until the current flowing across the inductor reaches a first threshold, and switching OFF the high side switch when the current flowing across the inductor reaches the first threshold, and
   - switching ON the low side switch in response to the current flowing across the inductor reaching the first threshold, keeping the low side switch ON until the current flowing across the inductor reaches a second threshold, switching OFF the low side switch and starting a following switching period when the current flowing across the inductor reaches the second threshold. The first threshold is equal to ILtarget + ILband/2 and the second threshold is equal to ILtarget - Ilband/2, where ILtarget is determined by a constant target average value of a current flowing across the inductor, and ILband is a range of variation of the current flowing across the inductor determined based on one of the following equations:$ILband = \left(Vld/Ld\right) * Toff ,$ Eq1) with Toff a value of an ON-time duration of the low side switch at each switching period, Lv an inductance value of the inductor, and Vld a voltage across a load connected between a second terminal of the inductor and the second node, and$ILband = Tsw * \left(VId/Lv\right) * \left(1-\left(VId/Vsup\right)\right) ,$ eq2) with Tsw a value of the constant switching period, and Vsup a voltage between the first and second nodes.

According to one embodiment, the step-down switched mode power supply comprises a second circuit configured to determine ILband based on equation eq1 or eq2, and to provide the first and second thresholds to the first circuit.

According to one embodiment, ILtarget is equal to the constant target average value.

According to one embodiment, the second circuit comprises a frequency compensation circuit configured to provide ILtarget based on the constant target average value and a value of the current flowing across the inductor.

According to one embodiment, the frequency compensation circuit is of the proportional integral derivative type or of the integral type.

According to one embodiment:
the second circuit comprises a sub-circuit configured to provide, between first and second outputs of the second circuit, a voltage Vband proportional to ILband,
the second circuit comprises two identical resistive elements series connected between the first and second outputs, and
the second circuit is configured to apply a voltage proportional to ILtarget to an interconnection node of the two resistive elements with each other, so that the first and second outputs provide two voltages representative of the first and second thresholds.

According to one embodiment, the sub-circuit comprises:
a first resistive element and a switch series connected between the second node and a node configured to receive the voltage Vld, the switch being configured to be ON when the low side switch is ON, and OFF when the low side switch if OFF;
a second resistive element and a capacitive element connected in parallel between the first and second outputs; and
at least one current mirror configured to provide a first current flowing across the second resistive element and the capacitive element connected in parallel, that is a copy of a second current flowing across the series connected first resistive element and switch.

According to one embodiment, the second resistive element is implemented by the two identical resistive elements.

According to one embodiment, the first circuit comprises:
a first comparator configured to provide a first binary signal representative of a comparison of the current flowing across the inductor with the first threshold;
a second comparator configured to provide a second binary signal representative of a comparison of the current flowing across the inductor with the second threshold; and
a control circuit configured to receive the first and second binary signals and to control the high side switch and the low side switch based on the first and second binary signals.

According to one embodiment:
the first circuit is configured to receive a first voltage representative of the current flowing across the inductor;
the first circuit comprises a first comparator having a first input configured to receive the first voltage, and a second input coupled to the first output of the second circuit, the first comparator being configured to provide a first binary signal representative of a comparison of the current flowing across the inductor with the first threshold;
the first circuit comprises a second comparator having a first input configured to receive the first voltage, and a second input coupled to the second output of the second circuit, the second comparator being configured to provide a second binary signal representative of a comparison of the current flowing across the inductor with the second threshold; and
the first circuit comprises a control circuit configured to receive the first and second binary signals and to control the high side switch and the low side switch based on the first and second binary signals.

A further embodiment provides a system comprising:
the switched mode power supply as described above;
an inductor having a first terminal connected to the intermediate node; and
a load connected between a second terminal of the inductor and the second node,
wherein the load comprises a string of a plurality of LEDs series connected between the second terminal of the inductor and the second node, and, for each LED of the plurality of LEDs, a bypass switch connected in parallel of said LED.

### Brief description of drawings

The foregoing features and advantages, as well as others, will be described in detail in the following description of specific embodiments given by way of illustration and not limitation with reference to the accompanying drawings, in which:
Figure 1 illustrates an embodiment of a buck current switched mode power supply;
Figure 2 illustrates an example of operation of the regulator of Figure 1;
Figure 3 illustrates an example embodiment of a circuit of the regulator of Figure 1;
Figure 4 illustrates an example embodiment of another circuit of the regulator of Figure 1;
Figure 5 illustrates an example embodiment of another circuit of the regulator of Figure 1;
Figure 6 illustrates another example embodiment of the circuit of Figure 5;
Figure 7 illustrates an example embodiment of a circuit implemented in the circuit of Figure 5; and
Figure 8 illustrates, with more details, an example embodiment of the circuit of Figure 5 comprising the circuit of Figure 7.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 % or 10°, and preferably within 5 % or 5°.

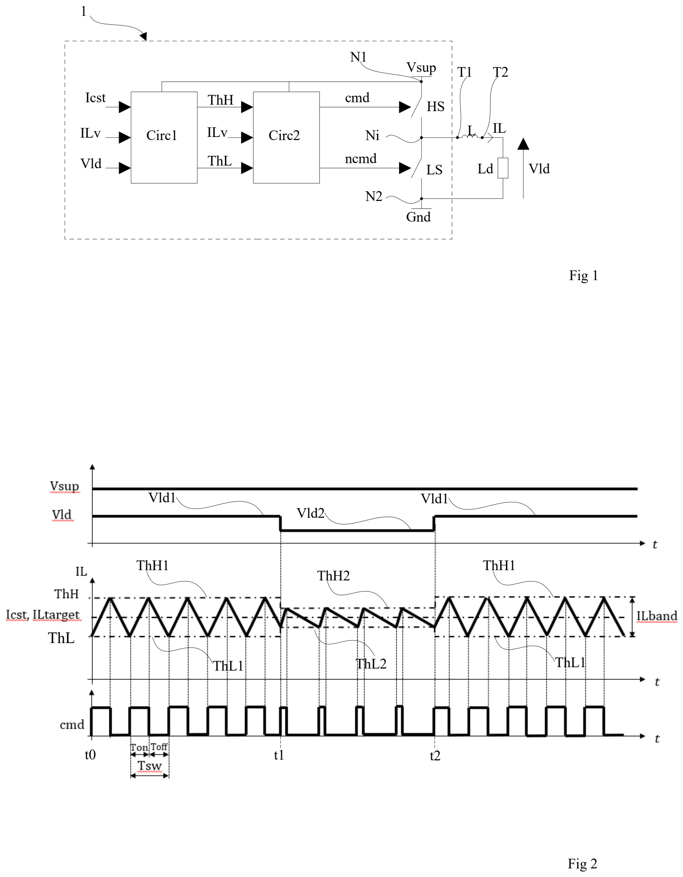

Figure 1 illustrates an embodiment of a buck current switched mode power supply 1, delimited by dotted lines in Figure 1.

The switched mode power supply 1 operates at a constant switching period Tsw. Preferably, the value of the constant switching period can be programmed by a user.

The buck current regulator 1 comprises a high side switch HS connected between two nodes N1 and Ni. For example, the switch HS has a first conduction terminal coupled, preferably connected, to the node N1, and a second conduction terminal coupled, preferably connected, to the node Ni.

The regulator comprises a low side switch LS connected between the node Ni and a node N2. For example, the switch LS has a first conduction terminal coupled, preferably connected, to the node Ni, and a second conduction terminal coupled, preferably connected, to the node N2.

The node N2 is configured to receive a reference potential GND, for example the ground potential. Node N1 is configured to receive a power supply potential Vsup. The potential Vsup is, for example, referenced at the reference potential. The potential Vsup is, for example, positive. Node Ni is an intermediate node, that is configured to be connected to a first terminal T1 of an inductor L.

A load Ld is connected between a second terminal T2 of the inductor L and the node N2. For example, the load Ld has a first terminal coupled, for example connected, to the terminal T2, and a second terminal coupled, preferably connected, to node N2.

According to one embodiment, the load Ld comprises a string of a plurality of components, for example of LEDs, series connected between terminal T2 and node N2, and, for each component of the plurality of components, a switch connected in parallel of this component, this switch being called bypass switch. The load Ld may comprise a capacitor connected in parallel with the plurality of components series-connected.

The regulator comprises a control circuit Circ2 configured to control the state of the switches HS and LS. The circuit Circ2 controls the switches HS and LS in pulse width modulation (PWM). For example, the circuit Circ2 provides a binary signal cmd that controls the switch HS, and a binary signal ncmd that controls the switch LS. The signal cmd has a constant period Tsw. For example, when the signal cmd is in a first state, for example a high state, the switch HS is ON, and when the signal cmd is in a second state, for example a low state, the switch HS is OFF. For example, when the signal cmd is in its first state, the signal ncmd is in a second state, for example a low state, and the switch LS is OFF, and when the signal cmd is in its second state, the signal ncmd is in a first state, for example a high state, and the switch LS is OFF.

More particularly, the circuit Circ2 is configured, at each switching period Tsw to switch ON the switch HS at the beginning of the period Tsw, to then keep the switch HS ON until a current IL flowing across the inductor L rises above a threshold ThH, and to switch OFF the switch HS when the current IL rises above threshold ThH. Then, during the same switching period, the circuit Circ2 is configured to switch ON the switch LS in response to the current IL becoming higher than threshold ThH, for example to switch ON the switch LS when the switch HS is switched OFF, to then keep the switch LS in the ON state until the current IL falls below a threshold ThL, and to switch OFF the switch LS when the current IL falls below threshold ThL. The switching OFF of the switch LS corresponds to the end of the current switching period Tsw, and to the beginning of the next switching period Tsw.

The circuit Circ2 thus receives the thresholds ThH and ThL and the current value ILv of the current IL.

The regulator 1 comprises a circuit Circ1. The circuit Circ1 is configured to provide the thresholds ThH and ThL to the circuit Circ2.

More particularly, the circuit Circ1 is configured to provide the thresholds ThH and ThL so that these thresholds are equal respectively to ILtarget + ILband/2 and ILtarget - ILband/2, with ILtarget a target value determined by a constant target average value Icst for the current IL, and ILband a range of variation of the current IL, or said in other word, the difference between the current maximal value of the current IL and the current minimal value for the current IL.

For example, the value ILtarget is equal to Icst.

In another example, the value ILtarget is provided by a frequency compensation circuit of the circuit Circ1, not shown on Figure 1, that receives the value Icst and the current value ILv of the current IL, and that provides the value ILtarget based on a value Icst and the current value of the current IL. As an example, the frequency compensation circuit is of the proportional integral derivative (PID) type, or of the integral type. Having the frequency compensation circuit in the circuit Circ1 allows to improve the stability of the regulation loop implemented by the regulator 1, and to reduce the oscillations of the average current IL provided by the regulator 1.

In order to provide the thresholds ThH and ThL, the circuit Circ1 receives the value Icst. When the target value ILtarget is determined based on the value ILv and the constant value Icst, the circuit Circ1 further receives the current value ILv of the current IL as its is represented in the example of Figure 1.

Still in order to provide the thresholds ThH and ThL, the circuit Circ1 further needs to calculate the range ILband. To do so, the circuit Circ1 uses on of the following equations eq1) and eq2).

eq1) ILband = (Vld/Lv)*Toff, with Toff a value of an ON-time duration of the low side switch LS at each switching period Tsw, Lv an inductance value of the inductor L, and Vld a voltage across the load Ld.

eq2) ILband = Tsw*(Vld/Lv)*(1 - (Vld/Vsup)), with Tsw the duration value of the constant switching period Tsw, Lv the inductance value of the inductor L, Vld the voltage across the load Ld, and Vsup the supply voltage.

As an example, the value Lv of the inductor L is programmed into the circuit Circ1.

As an example, the circuit Circ1 receives the voltage Vld, or a signal indicating the value of the voltage Vld.

As an example, the circuit Circ1 receives the voltage Vsup that, for example, also serve to power the circuit Circ1, or a signal indicating the value of the voltage Vsup.

As an example, the duration value of the constant switching period Tsw is known from the circuit Circ1, for example because this value is programmed, or stored, into the circuit Circ1.

As an example, the value Toff is known by the circuit Circ1 from the control signal cmd or ncmd provided by the circuit Circ2 to control the switches HS and LS. In particular, for calculating the value ILband at a current switching period Tsw using eq1), the value Toff measured at the previous switching period Tsw, or a mean value of the values Toff measured at a plurality of previous switching periods Tsw may be used. The use of the value Toff of the previous switching period Tsw or of the value Toff averaged on multiple previous switching periods Tsw in the equation eq1) for calculating ILband for a current switching period Tsw is correct because, in practice, the changes of the voltage Vld are long compared to the switching period Tsw. For example, each change of the voltage Vld from a first steady value to a second steady value will take at least ten switching periods Tsw having each the same constant value. As a further example, when the voltage Vld changes abruptly, meaning that the voltage Vld changes from a first steady value to a second steady value in less than ten times the constant time value of the switching period, the time value of the switching period Tsw will vary during a transient period before going back to its constant value, but the average current flowing across the inductor L will stay equal to the target current ILtarget because the threholds ThL and ThH stay symmetrical with respect to the target current ILtarget.

Although not shown in Figure 1, the regulator may comprise a current sensor for providing a signal, for example a voltage, indicating the current value ILv of the current IL. In such a case, the thresholds ThH and ThL may be provided by the circuit Circ1 to the circuit Circ2 under the form of two different voltages indicating respectively the value of the threshold ThH and the value of the threshold ThL. The comparison between the current value ILv of the current IL with the threshold ThH, respectively ThL, may then be implemented by comparing the voltage indicating the value ILv and the voltage indicating the value of the threshold ThH, respectively ThL.

Figure 2 illustrates an example of operation of the regulator 1 of Figure 1. More particularly, Figure 2 illustrate with chronograms the evolution with time t of the supply voltage Vsup, of the voltage Vld, of the current IL, of the thresholds ThH and ThL, of the range ILband and of the control of the switches HS and LS.

In the example of Figure 2, ILtarget is equal to Icst. Further, in the example of Figure 2, the signal cmd controls the switches HS and LS, the switches HS and LS being respectively ON and OFF when cmd is high, and respectively OFF and ON when cmd is low. In each switching period Tsw, the duration of the ON state of the switch HS is referenced Ton, and the duration of the OFF state of the switch HS is referenced Toff.

In Figure 2, at each switching period Tsw, the switch HS is switched ON at the beginning of the switching period Tsw. While the switch HS is ON, the current IL increases until becoming equal to ThH. When IL becomes equal to ThH, the switch HS is turned OFF and the switch LS is turned ON. While the switch LS is ON, the current IL decreases until becoming equal to ThL. When IL becomes equal to ThL, the current switching period Tsw ends by turning OFF the switch LS, and the next switching period Tsw begins by turning ON the switch HS.

Between time instants t0 and t1, the voltage Vld has a first value Vld1. The circuit Circ1 thus determines a first value of the range of current ILband, and first values ThH1 and ThL1 of the respective thresholds ThH and ThL based on this first value of ILband. Because the first value of ILband is determined based on the equation eq1) or eq2), and values ThH1 and ThL1 of the thresholds ThH and ThL are determined based on this first value of ILband, the switching frequency is constant, and the average value of the current IL is equal to ILtaget.

At the time instant t1, the voltage Vld drops from the first value Vld1 to a lower second value Vld2, for example because one or more components of the load are bypassed. Thus, the value of the range of current ILband change to a second value lower than the first value of ILband, resulting in the thresholds ThH and ThL switching from the respective first values ThH1 and ThL1 to respective second values ThH2 and ThL2 determined by the circuit Circ1 based on the second value of ILband.

Between time instants t1 and t2, the voltage Vld stays at the second value Vld2. Thus, the value of the range of current ILband stays equal to the second of the range of current ILband, and the values of the thresholds ThH and ThL stays equal to the respective values ThH2 and ThL2. Between these time instants t1 and t2, because the second value of ILband is determined based on the equation eq1) or eq2), and values ThH2 and ThL2 of the thresholds ThH and ThL are determined based on this second value of ILband, the switching frequency stays constant and equal to the switching frequency between instants t0 and t1, and the average value of the current IL stays equal to ILtaget.

At the time instant t2, the voltage Vld rises from the second value Vld2 to the first value Vld1. Thus, the value of the range of current ILband change to the first value higher than the second value of ILband, resulting in the thresholds ThH and ThL switching from the respective second values ThH2 and ThL2 to respective first values ThH1 and ThL1 determined by the circuit Circ1 based on the first value of ILband.

The Figure 2 thus illustrates that determining the thresholds ThH and ThL such that ThH = ILtarget + ILband/2 and ThL = ILtarget + ILband/2, where ILband is determined based on the equation eq1) or eq2) allows for the switching frequency to stay constant and equal to 1/Tsw, and to the average value of the current IL to stay equal to ILtarget, even when the voltage Vld varies.

Although not shown on Figure 2, the above described way to determine the thresholds ThH and ThL also allows to keep the switching frequency constant and the average value of the current IL equal to ILtarget when the voltage Vsup varies. The switching frequency is kept constant even when the supply voltage Vdd changes.

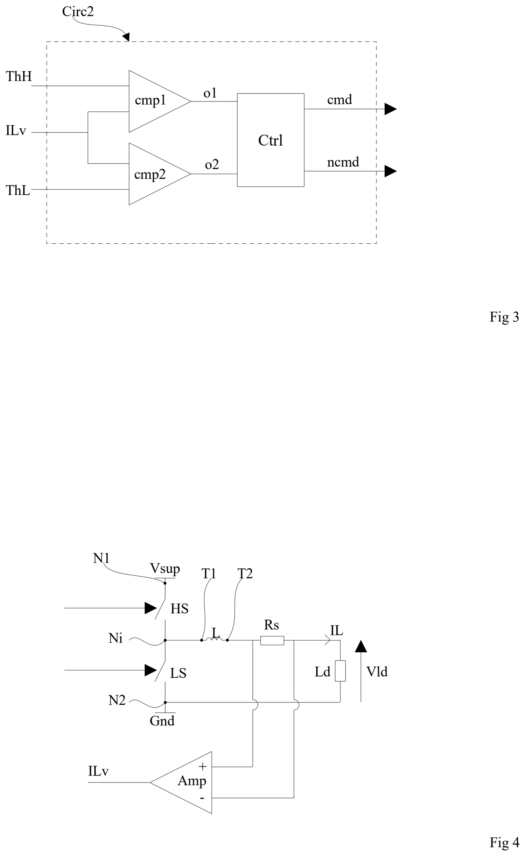

Figure 3 illustrates an example embodiment of the circuit Circ2 of the regulator 1.

In the example, the circuit Circ2 receives the current value ILv of the current IL, for example under the form of a voltage, and the two thresholds ThH and ThL, for example under the form of two respective voltages.

Circuit Circ2 comprises, in this example, two comparators cmp1 and cmp2. Comparator cmp1 is configured to provide a binary signal o1 representative of a comparison of the current IL with the threshold ThH, and comparator cmp2 configured to provide a binary signal o2 representative of a comparison of the current IL with the second threshold. For example, the comparator cmp1 receives the value ILv and the threshold ThT, and the comparator cmp2 receives the value ILv and the threshold ThL.

Circuit Circ2 comprises a control circuit Ctrl. The circuit Ctrl receives the comparison results of the current IL with the respective thresholds ThH and ThL, for example the signals o1 and o2. The circuit Ctrl control the switches HS and LS based on these comparison results.

For example, the circuit Ctrl provides the signals cmd and ncmd based on the comparison results, for example based on the signals o1 and o2.

For example, the circuit Ctrl may comprise a SR flip-flop having a set input S controlled by the signal o1, a reset input R controlled by the signal o2, a first output providing the signal cmd, and a second output corresponding to the binary complement of the first output and providing the signal ncmd.

Figure 4 illustrates an example embodiment of another circuit of the regulator 1.

In particular, the Figure 4 illustrates a current sensor that is used for providing the current value ILv of the current IL. More particularly, in the example of Figure 4, the current sensor provides the value ILv under the form of a voltage having a value determined by the value of the current IL, or, said in other words, a voltage representative of the value of the current IL.

The current sensor comprises a shunt resistor Rs series connected with the inductor L. For example, the resistor Rs is connected between the terminal T2 of the inductor L and the load Ld.

The current sensor further comprises an operational amplifier Amp receiving the voltage across the resistor Rs and providing an output voltage representative of the value ILv of the current IL. For example, a first input, for example an inverting input (-), is connected to a first terminal of the resistor Rs, for example to the terminal of the resistor Rs that is connected to terminal, and a second input, for example a non-inverting input (+), is connected to a second terminal of the resistor Rs, for example the terminal of the resistor Rs that is connected to the load Ld.

For example, the voltage provided by the current sensor is equal to product of the value ILv of the current IL with the value of the resistor Rs with the gain of the circuit Amp, and is thus proportional to the value ILv.

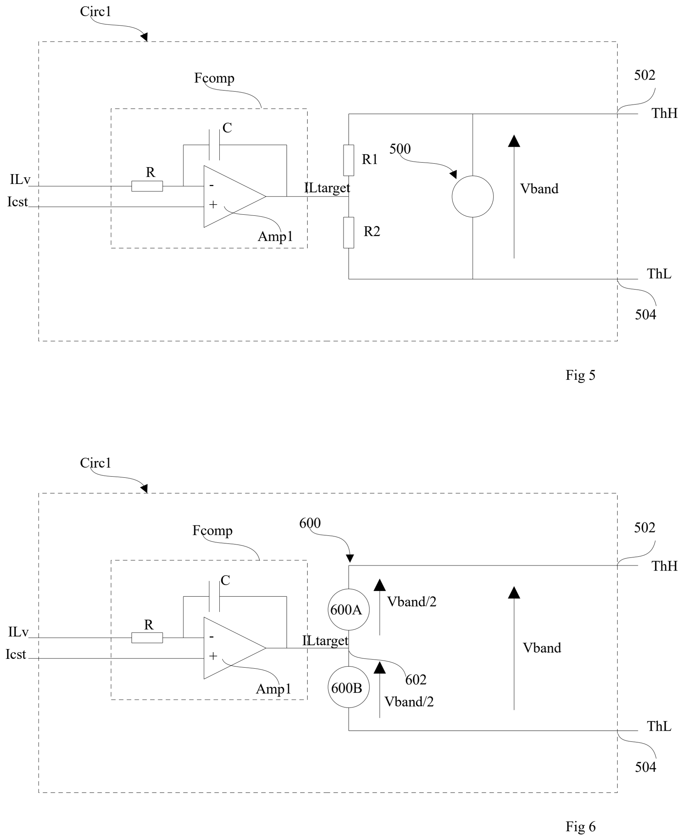

Figure 5 illustrates an example embodiment of the circuit Circ1 of the regulator 1.

In the example of Figure 5, the circuit Circ1 comprises a frequency compensation circuit Fcomp. The circuit Fcomp receives the constant value Icst, for example under the form of a voltage, the value ILv of the current IL, for example under the form of a voltage, for example the voltage provided by the current sensor of Figure 4, and provides the target value ILtarget, for example under the form of a voltage.

As an example, the circuit Fcomp is of the proportional integral derivative type.

As another example, the circuit Fcomp is of the integral type only, as represented in Figure 5. For example, the circuit Fcomp comprises an operational amplifier Amp1. For example, an input, for example an inverting input (-), of the amplifier Amp1 receives the voltage ILv via a resistor R, and another input, for example a non-inverting input (+), of the amplifier Amp1 receives the voltage Icst. The output of the amplifier Amp1 is coupled to its inverting input (-) via a capacitor C. The output of the amplifier Amp1 provides the value ILtarget under the form of a voltage.

In alternative embodiments, the circuit Fcomp may be suppressed, and the value ILtarget is then equal to the value Icst.

The circuit Circ1 comprises, in the example of Figure 5, a circuit (or sub-circuit) 500 configured to provide, between a first output 502 and a second output 504 of the circuit Circ1, a voltage Vband proportional to the range of current ILband, or, said in other word, a voltage Vband representative of, or determined by, the range ILband.

The circuit Circ1 is configured to apply a voltage proportional to ILtarget to the interconnection node of the resistive elements R1 and R2 with each other, so that the output 502 provides a voltage representative of the threshold ThH, and the output provides a voltage
The circuit Circ1 further comprises, in the example of Figure 5, two identical resistive elements R1 and R2 series connected between the outputs 502 and 504. Said in a more general manner, the output 502, respectively 504, provides the threshold ThH, respectively ThL.

For example, the output 502 of the circuit Circ1 is coupled, for example connected, to the input of the comparator cmp1 configured to receive the voltage representative of the threshold ThH, and the output 504 of the circuit Circ1 is coupled, for example connected, to the input of the comparator cmp2 configured to receive the voltage representative of the threshold ThL.

Figure 6 illustrates another example embodiment of the circuit Circ1 of the regulator 1.

In the example of Figure 6, the circuit Circ1 comprises the frequency compensation circuit Fcomp providing the value ILtarget based on the value Icst and the value ILv of the current IL. However, in alternative embodiments, the circuit Fcomp may be suppressed, and the value ILtarget is then equal to the value Icst.

In the example of Figure 6, instead of the circuit 500, the circuit Circ1 comprises a circuit 600 configured to provide, between the output 502 and 504, the voltage Vband. The circuit 600 comprises a first circuit 600A configured to provide a voltage equal to Vband/2 between the output 502 and a node 602, this voltage Vband/2 being referenced to the node 602. The circuit 600 further comprises a second circuit 600B configured to provide a voltage equal to Vband/2 between the node 602 and the output 504, this voltage Vband/2 being referenced to the output 504.

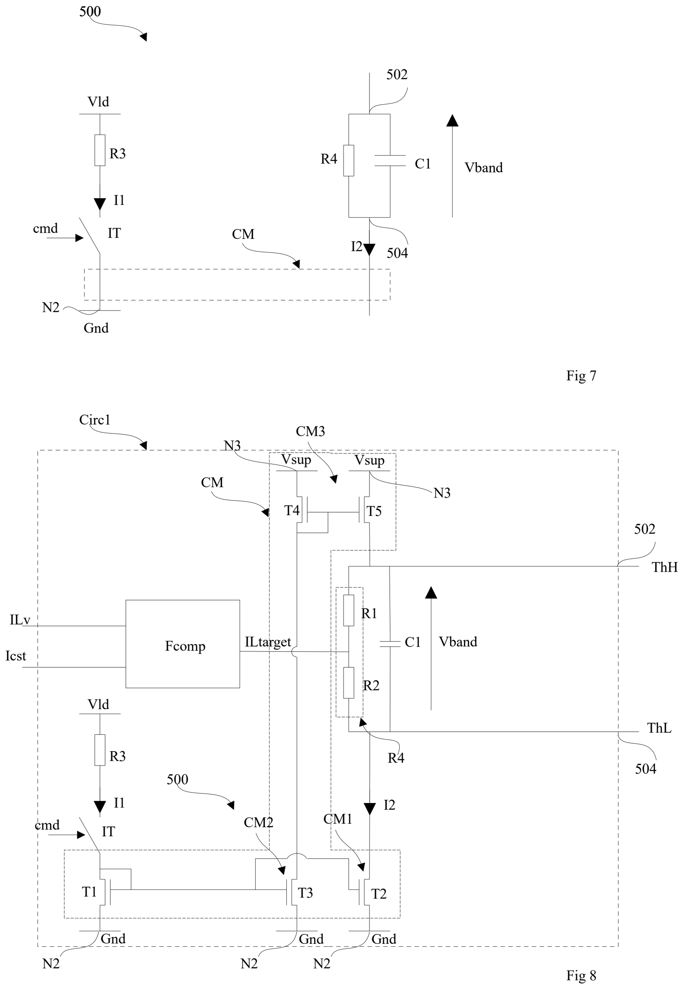

The circuit Circ1 is configured to apply a voltage proportional to ILtarget to the node 602, so that the output 502 provides a voltage representative of the threshold ThH, and the output provides a voltage
Figure 7 illustrates an example embodiment of the circuit 500. In the example of Figure 7, the circuit 500 is configured to provide the voltage Vband representative of the range of current ILband determined according to equation eq1).

Circuit 500 comprises a resistive element R3 and a switch IT series connected between node N2 and a node N3 receiving the voltage Vld.

The switch IT is controlled to be ON when the switch LS is ON, or, said in other words, when the switch HS is OFF. The switch IT is further controlled to be OFF when the switch LS is OFF. Thus, the switch IT is ON, at each switching period Tsw, for the duration Toff. For example, the switch IT is controlled by the signal cmd, or the signal ncmd.

When the switch IT is ON, a current I1 proportional, for example equal, to Vld/R3 flow in the switch IT and the resistive element R3.

Circuit 500 further comprises a resistive element R4 and a capacitive element C1 connected in parallel between the outputs 502 and 504 of the circuit Circ1 (see Figure 5). Preferably, the resistive element R4 corresponds to the series connected resistive elements R1 and R2.

Circuit 500 also comprises at least one current mirror CM schematically represented by a rectangle in dotted lines in Figure 7. The current mirror CM is configured to provide a current I2 that flow across the element R4 and C1 connected in parallel, and that is a copy of the current I1. Said in other words, the current I2 is equal or proportional to the current I1.

Thus, when the product of the values of the elements R3 and C1 is higher than the switching frequency, for example at least ten time higher, the voltage across the parallel association of the elements R3 and C1 is the voltage Vband and is proportional to Vld*Toff, and thus to ILband determined according to equation eq1). For example, when I1 is equal to I2, Vband = A.ILband, with ILband determined by equation eq1), and A equal to (R4v*Lv)/(R3v*Tsw), R3v and R4v being the resistance values of the components respectively R3 and R4.

Figure 8 illustrates, with more details, an example embodiment of the circuit Circ1 of Figure 5 comprising the circuit 500 of Figure 7.

In the example of Figure 8, the resistive element R4 of the circuit 500 is implemented by, or corresponds to, the series connected resistive elements R1 and R2.

In the example of Figure 8, the current mirror CM comprise three current mirror CM1, CM2 and CM3.

The current mirror CM1 comprises a MOS transistor T1 connected between the switch IT and the node N2, and a transistor T2 connected in mirror with the transistor T1, between the output 504 and the node N2. For example, the transistor T1 is a NMOS transistor having its source coupled, preferably connected, to node N2, and its drain and gate connected with each other and with the series connected elements R3 and IT, the transistor T2 being a NMOS transistor having its source coupled, preferably connected, to node N2, its gate coupled, preferably connected, to the gate of transistor T1, and its drain coupled, preferably connected, to the output 504.

The current mirror CM2 comprises the MOS transistor T1, and a transistor T3 connected in mirror with the transistor T1, between the node N2 and the current mirror M3. For example, the transistor T3 is a NMOS transistor having its source coupled, preferably connected, to node N2, its gate connected to the gate of transistor T1, and its drain coupled, preferably connected to the current mirror CM3.

The current mirror CM3 comprises a MOS transistor T4 connected between the current mirror CM2 and a node N3 configured to receive a bias or supply voltage, for example the supply voltage Vsup. The transistor T4 is for example connected between the node N3 and the transistor T3 of the current mirror CM2. The current mirror CM3 further comprises a transistor T5 connected in mirror with the transistor T4, between the output 502 and the node N3. For example, the transistor T4 is a PMOS transistor having its source coupled, preferably connected, to node N3, and its drain and gate connected with each other and with the current mirror CM2, for example with the drain of the transistor T3, the transistor T5 being a PMOS transistor having its source coupled, preferably connected, to node N3, its gate coupled, preferably connected, to the gate of transistor T4, and its drain coupled, preferably connected, to the output 502.

In an alternative embodiment not illustrated by a Figure, the at least one current mirror CM comprises only the current mirrors CM2 and CM3, and does not comprise the current mirror CM1. In such an alternative embodiment, when the circuit Circ1 comprises the circuit Fcomp as illustrated in Figures 5 and 6, the output of the amplifier Amp1 is for example connected to the output 504, and the capacitive element C is for example connected between the input of the amplifier Amp1 and the interconnection node of the element R1 with the element R2.

In another alternative embodiment not illustrated by a Figure, the at least one current mirror CM comprises only the current mirror CM1, and does not comprise current mirrors CM2 and CM3. In such an alternative embodiment, when the circuit Circ1 comprises the circuit Fcomp as illustrated in Figures 5 and 6, the output of the amplifier Amp1 is for example connected to the output 502, and the capacitive element C is for example connected between the input of the amplifier Amp1 and the interconnection node of the element R1 with the element R2.

Various embodiments and variants have been described. Those skilled in the art will understand that certain features of these embodiments can be combined and other variants will readily occur to those skilled in the art. In particular, the circuit Circ1 could be implemented differently from the examples described above. For example, the circuit Circ1 may comprise analog-to-digital converters for converting the signal ILv, Icst, and Vld, and a digital computing unit to process these digital values in order to provide the thresholds ThH and ThL. For example, the digital computing unit may comprise a look up table stored in a memory, the look up table having at least the current values of the parameters Vld and Toff, or of the parameters Vld and Vsup, and providing as output the corresponding value of ILband or the corresponding values of the thresholds ThH and ThL. As another example, the digital computing unit may comprise a microprocessor executing instructions for implementing in software the determination of the value ILband.

Finally, the practical implementation of the embodiments and variants described herein is within the capabilities of those skilled in the art based on the functional description provided hereinabove. In particular, concerning the value of the different resistive, capacitive and inductive components described above, those skilled in the art are capable of choosing these values so that the current IL is compared with the threshold ThH = ILtarget + ILband/2, and the threshold ThL = ILtarget - Ilband/2, where ILband is determined by the equation eq1) or by the equation eq2) .

## Claims

1. A step-down switched mode power supply (1) configured to operate at a constant switching period (Tsw) and comprising:
a high side switch (HS) connected between a first node (N1) configured to receive a power supply potential (Vsup), and an intermediate node (Ni) configured to be coupled to a first terminal (T1) of an inductor (L);
a low side switch (LS) connected between the intermediate node (Ni) and a second node (N2) configured to receive a reference potential (Gnd);
a first circuit (Circ2) configured to implement, at each switching period (Tsw), the following operations:
- switching ON the high side switch (HS) at the beginning of the switching period (Tsw), keeping the high side switch (HS) ON until the current (IL) flowing across the inductor (L) reaches a first threshold (ThH), and switching OFF the high side switch (HS) when the current (IL) flowing across the inductor (L) reaches the first threshold (ThH), and
- switching ON the low side switch (LS) in response to the current (IL) flowing across the inductor (L) reaching the first threshold (ThH), keeping the low side switch (LS) ON until the current (IL) flowing across the inductor (L) reaches a second threshold (ThL), switching OFF the low side switch (LS) and starting a following switching period (Tsw) when the current (IL) flowing across the inductor (L) reaches the second threshold (ThL),
wherein the first threshold (ThH) equal to ILtarget + ILband/2 and the second threshold (ThL) equal to ILtarget - Ilband/2, where ILtarget is determined by a constant target average value (Icst) of a current (IL) flowing across the inductor (L), and ILband is a range of variation of the current (IL) flowing across the inductor (L) determined based on one of the following equations:$ILband = \left(Vld/Lv\right) * Toff ,$ eq1) with Toff a value of an ON-time duration of the low side switch (LS) at the previous switching period (Tsw) or an average value of the ON-time duration of the low side switch (LS) over multiple previous switching period (Tsw), Lv an inductance value of the inductor (L), and Vld a voltage across a load (Ld) connected between a second terminal (T2) of the inductor (L) and the second node (N2), and$ILband = Tsw * \left(Vld/Lv\right) * \left(1-\left(Vld/Vsup\right)\right) ,$ eq2) with Tsw a value of the constant switching period, and Vsup a voltage between the first and second nodes (N1; N2).

2. The step-down switched mode power supply of claim 1, wherein the step-down switched mode power supply comprises a second circuit (Circ1) configured to determine ILband based on equation eq1 or eq2, and to provide the first and second thresholds to the first circuit (CIRC2).

3. The step-down switched mode power supply of claim 2, wherein ILtarget is equal to the constant target average value (Icst).

4. The step-down switched mode power supply of claim 2, wherein the second circuit (Circ1) comprises a frequency compensation circuit (Fcomp) configured to provide ILtarget based on the constant target average value (Icst) and a value (Ilv) of the current (IL) flowing across the inductor (L).

5. The step-down switched mode power supply of claim 4, wherein the frequency compensation circuit (Fcomp) is of the proportional integral derivative type or of the integral type.

6. The step-down switched mode power supply of any of claims 2 to 5, wherein:
the second circuit (Circ1) comprises a sub-circuit (500) configured to provide, between first and second outputs (502, 504) of the second circuit (Circ1), a voltage Vband proportional to ILband,
the second circuit (Circ1) comprises two identical resistive elements (R1, R2) series connected between the first and second outputs (502, 504), and
the second circuit (Circ1) is configured to apply a voltage proportional to ILtarget to an interconnection node of the two resistive elements with each other, so that the first and second outputs (502, 504) provide two voltages representative of the first and second thresholds (ThH, ThL).

7. The step-down switched mode power supply of claim 6, wherein the sub-circuit (500) comprises:
a first resistive element (R3) and a switch (IT) series connected between the second node (N2) and a node configured to receive the voltage Vld, the switch (IT) being configured to be ON when the low side switch (LS) is ON, and OFF when the low side switch (LS) if OFF;
a second resistive element (R4) and a capacitive element (C1) connected in parallel between the first and second outputs (502, 504); and
at least one current mirror (CM, CM1, CM2, CM3) configured to provide a first current (I2) flowing across the second resistive element (R4) and the capacitive element (C1) connected in parallel, that is a copy of a second current (I1) flowing across the series connected first resistive element (R3) and switch (IT).

8. The step-down switched mode power supply of claim 7, wherein the second resistive element (R4) is implemented by the two identical resistive elements (R1, R2).

9. The step-down switched mode power supply of any of claims 1 to 7, wherein the first circuit (Circ2) comprises:
a first comparator (cmp1) configured to provide a first binary signal (o1) representative of a comparison of the current (IL) flowing across the inductor (L) with the first threshold (ThH);
a second comparator (cmp2) configured to provide a second binary signal (o2) representative of a comparison of the current (IL) flowing across the inductor (L) with the second threshold (ThL); and
a control circuit (Ctrl) configured to receive the first and second binary signals (o1, o2) and to control the high side switch (HS) and the low side switch (LS) based on the first and second binary signals (o1, o2).

10. The step-down switched mode power supply of any of claims 5 to 7, wherein:
the first circuit (Circ2) is configured to receive a first voltage (ILv) representative of the current flowing across the inductor (L);
the first circuit (Circ2) comprises a first comparator (cmp1) having a first input configured to receive the first voltage, and a second input coupled to the first output (502) of the second circuit (Circ1), the first comparator being configured to provide a first binary signal (o1) representative of a comparison of the current (IL) flowing across the inductor (L) with the first threshold (ThH);
the first circuit (Circ2) comprises a second comparator (cmp2) having a first input configured to receive the first voltage, and a second input coupled to the second output (504) of the second circuit (Circ1), the second comparator being configured to provide a second binary signal (o2) representative of a comparison of the current (IL) flowing across the inductor (L) with the second threshold (ThL); and
the first circuit (Circ2) comprises a control circuit (Ctrl) configured to receive the first and second binary signals (o1, o2) and to control the high side switch (HS) and the low side switch (LS) based on the first and second binary signals (o1, o2).

11. A system comprising:
the switched mode power supply (1) of any of claims 1 to 10;
an inductor (L) having a first terminal (T1) connected to the intermediate node (Ni); and
a load (Ld) connected between a second terminal (T2) of the inductor and the second node (N2),
wherein the load (Ld) comprises a string of a plurality of LEDs series connected between the second terminal (T2) of the inductor (L) and the second node (N2), and, for each LED of the plurality of LEDs, a bypass switch connected in parallel of said LED.
